# EUROPÄISCHE PATENTSCHRIFT

(11) **EP 2 607 186 B1**
(45) Veröffentlichungstag und Bekanntmachung des Hinweises auf die Patenterteilung: **06.11.2019**
(21) Anmeldenummer: 12199044.4
(22) Anmeldetag: 21.12.2012
(51) Int. Cl.: B60S 1/08

(54) **Verfahren zum Betreiben einer Scheibenwischeinrichtung sowie Scheibenwischeinrichtung**
Method for operating a window wiper device and window wiper device
Procédé destiné au fonctionnement d'un dispositif d'essuie-glace et dispositif d'essuie-glace

(30) Priorität: 21.12.2011 DE 102011089333
(43) Veröffentlichungstag der Anmeldung: 26.06.2013
(73) Patentinhaber: ROBERT BOSCH GMBH, 70442 Stuttgart (DE); Volkswagen AG, 38436 Wolfsburg (DE)
(72) Erfinder: Patrix, Bernhard, 77830 Buehlertal (DE); May, Michael, 77654 Offenburg (DE); Fangmeier, Wilhelm, 38550 Isenbüttel (DE)

(56) Entgegenhaltungen:
- EP-A1- 0 654 891
- DE-A1-102004 016 449
- DE-A1-102006 050 659

## Beschreibung

Die Erfindung betrifft ein Verfahren zum Betreiben einer Scheibenwischeinrichtung, insbesondere eines Kraftfahrzeugs, wobei die Scheibenwischeinrichtung zumindest ein an einem Wischerarm vorgesehenes Wischerblatt mit einer mit einer Scheibe des Kraftfahrzeugs in Berührkontakt stehenden flexiblen Wischlippe aufweist und das Wischerblatt bezüglich der Scheibe von einem mit dem Wischerarm über eine Antriebswelle wirkverbundenen Wischermotor alternierend zwischen einer ersten Wendestellung und einer zweiten Wendestellung bewegt wird, wobei innerhalb eines bestimmten Zeitraums nach jeder Wendestellung die Absolutdrehzahl der Antriebswelle an einem um eine bestimmte Zeitspanne nach der jeweiligen Wendestellung liegenden ersten Zeitpunkt entsprechend einer ersten Absolutdrehzahl derart gewählt wird, dass sie von einer zweiten Absolutdrehzahl verschieden ist, die an einem um die bestimmte Zeitspanne vor der jeweiligen Wendestellung liegenden zweiten Zeitpunkt vorliegt. Die Erfindung betrifft weiterhin eine Scheibenwischeinrichtung eines Kraftfahrzeugs.

### Stand der Technik

Verfahren der eingangs genannten Art dienen dem Betreiben von Scheibenwischeinrichtungen beispielsweise von Kraftfahrzeugen. Die Scheibenwischeinrichtung kann dabei insbesondere einer Frontscheibe oder einer Heckscheibe des Kraftfahrzeugs zugeordnet sein. Mit Hilfe der Scheibenwischeinrichtung kann Wasser, insbesondere Regenwasser oder von vor dem Fahrzeug fahrenden Fahrzeugen von der Straße aufgewirbeltes Wasser und/oder Schmutz von der Scheibe des Kraftfahrzeugs entfernt werden. Zu diesem Zweck weist die Scheibenwischeinrichtung den Wischerarm vor, an welchem das Wischerblatt mit der Wischlippe befestigt ist. Die Wischlippe steht vorzugsweise permanent mit der Scheibe des Kraftfahrzeugs in Berührbeziehungsweise Wischkontakt. Sie ist zu diesem Zweck flexibel ausgebildet, kann sich also der Kontur der Scheibe anpassen. Sie liegt zudem derart dicht mit wenigstens einem Bereich auf der Scheibe auf, dass das Wasser und/oder der Schmutz von der Scheibe bei einer Bewegung des Wischerarms abgestreift werden.

Der Wischerarm wird alternierend zwischen der ersten Wendestellung und der zweiten Wendestellung bewegt. Zu diesem Zweck ist er über die Antriebswelle mit dem Wischermotor verbunden. Bei aus dem Stand der Technik bekannten Verfahren tritt häufig bei dem Umkehren des Wischerarms in den Wendestellungen ein Geräusch auf, welches, insbesondere in Abhängigkeit von dem Kraftfahrzeug und/oder einer Fahrsituation des Kraftfahrzeugs, als störend empfunden wird. Dieses Geräusch wird insbesondere dadurch verursacht, dass sich die Wischlippe bei einer Umkehrung der Bewegungsrichtung des Wischerarms beziehungsweise des Wischerblatts zunächst aufrichtet, wobei der Wischerarm von der Scheibe fort gedrängt wird, und anschließend in die jeweils andere Richtung umklappt. Bei dem Umklappen bewegt sich der Wischerarm mitsamt dem Wischerblatt wieder auf die Scheibe zu.

Dieses Zurückfedern des Wischerarms nach den Wendestellungen wird beispielsweise verursacht durch ein Federelement, welches den Wischerarm in Richtung der Scheibe drängt und so das Wischerblatt mitsamt der Wischlippe gegen die Scheibe drückt. Dabei bewegt sich das Wischerblatt in Richtung der Scheibe und wird dann abrupt abgebremst. Durch dieses Abbremsen entsteht ein Schlag gegen die Scheibe, welcher das Geräusch verursacht. Die Stärke des Schlags und damit die Intensität des Geräuschs hängen also insbesondere von der Geschwindigkeit der Bewegung des Wischerarms in Richtung der Scheibe nach den Wendestellungen ab.

Aus dem Stand der Technik ist beispielsweise die Druckschrift DE 10 2006 050 659 A1 bekannt. Diese beschreibt ein Verfahren zum Steuern der Bewegung wenigstens eines zumindest ein Wischblatt tragenden Wischarmes einer Wischanlage für Fahrzeugscheiben mit einem Wischerantrieb, mit dem der wenigstens eine Wischarm während eines Wischbetriebes zwischen wenigstens zwei Umkehr- oder Wendelagen hin- und herbewegt wird und der wenigstens einen elektrischen Wischermotor aufweist, wobei die Geschwindigkeit und/oder die Beschleunigung des Wischermotors an wenigstens einer Wendelage zur Wendegeräuschdämpfung oder Wendegeräuschunterdrückung elektronisch einem Sollprofil entsprechend gesteuert und/oder geregelt wird.

### Offenbarung der Erfindung

Gegenüber den aus dem Stand der Technik bekannten Verfahren zum Betreiben der Scheibenwischeinrichtung weist das Verfahren mit den Merkmalen des Anspruchs 1 den Vorteil auf, dass auch in und/oder nach den Wendestellungen ein geräuscharmer Betrieb der Scheibenwischeinrichtung erfolgt. Insbesondere wird die Geschwindigkeit des Zurückfederns reduziert, mit welcher sich der Wischerarm nach den Wendestellungen in Richtung der Scheibe bewegt. Dies wird erfindungsgemäß erreicht, indem der Zeitraum an einer der Wendestellungen beginnt und bei einem Zeitpunkt endet, der bei mindestens 20% der Wendestellungszeitspanne nach der jeweiligen Wendestellung vorliegt, wobei die Wendestellungszeitspanne der zeitlichen Differenz zwischen der ersten und der zweiten Wendestellung entspricht. Grundsätzlich ist vorgesehen, dass innerhalb eines bestimmten Zeitraums nach jeder Wendestellung die Absolutdrehzahl der Antriebswelle an einem um eine bestimmte Zeitspanne nach der jeweiligen Wendestellung liegenden ersten Zeitpunkt entsprechend einer ersten Absolutdrehzahl derart gewählt wird, dass sie von einer zweiten Absolutdrehzahl verschieden ist, die an einem um die bestimmte Zeitspanne vor der jeweiligen Wendestellung liegenden zweiten Zeitpunkt vorliegt. Innerhalb des bestimmten Zeitraums soll also die Drehzahl der Antriebswelle der ersten Absolutdrehzahl entsprechen, welche von der zweiten Absolutdrehzahl unterschiedlich gewählt wird.

Während des Betriebs der Scheibenwischeinrichtung nimmt die Antriebswelle verschiedene Drehwinkelpositionen ein, welche an bestimmten Zeitpunkten vorliegen. Der ersten und der zweiten Wendestellung sind dabei jeweils bestimmte Drehwinkelpositionen und entsprechende Zeitpunkte zugeordnet. Die Gesamtheit der Drehwinkelpositionen, welche von der Antriebswelle während des Betriebs der Scheibenwischeinrichtung eingenommen werden, wird als Gesamtdrehwinkelbereich bezeichnet. Dieser erstreckt sich also von der kleinsten während des Betriebs eingenommenen Drehwinkelposition hin zu der größten eingenommenen Drehwinkelposition. Einen Ausschnitt aus diesem Gesamtdrehwinkelbereich beziehungsweise aus dem diesem entsprechenden Gesamtzeitraum stellt der bestimmte Zeitraum dar, welcher nach jeder Wendestellung vorliegt und sich von dem der jeweiligen Wendestellung zugeordneten Zeitpunkt bis hin zu einem weiteren, späteren Zeitpunkt erstreckt.

Innerhalb dieses Zeitraums, welcher grundsätzlich eine beliebige Dauer aufweisen kann, ist es nun vorgesehen, dass eine Variation der Absolutdrehzahl der Antriebswelle beziehungsweise des Wischermotors durchgeführt wird. Diese erfolgt derart, dass an dem ersten Zeitpunkt die erste Absolutdrehzahl und an dem zweiten Zeitpunkt die zweite Absolutdrehzahl vorliegt, wobei die erste Absolutdrehzahl von der zweiten Absolutdrehzahl verschieden ist. Unter Absolutdrehzahl ist der Absolutwert beziehungsweise der Betrag der Drehzahl zu verstehen; die Absolutdrehzahl kann also ausschließlich positive Werte aufweisen. Der erste Zeitpunkt liegt um die bestimmte Zeitspanne nach dem der jeweiligen Wendestellung zugeordneten Zeitpunkt. Analog dazu liegt der zweite Zeitpunkt um dieselbe bestimmte Zeitspanne vor dem der jeweiligen Wendestellung zugeordneten Zeitpunkt.

Der Wendestellung ist insoweit der bestimmte Zeitpunkt zugeordnet. Zu dem ersten Zeitpunkt gelangt man nun, indem die Zeitspanne zu dem bestimmten Zeitpunkt addiert wird. Entsprechend wird der zweite Zeitpunkt bestimmt, indem dieselbe Zeitspanne von dem bestimmten Zeitpunkt subtrahiert wird. Durch die Variation der Drehzahl der Antriebswelle in dem bestimmten Zeitraum wird insbesondere die Intensität des Zurückfederns des Wischerarms vermindert, sodass eine Geräuschreduzierung erreicht wird.

Der Wischermotor kann grundsätzlich beliebig ausgestaltet sein. Üblicherweise liegt er als Rundläufermotor, also umlaufender Motor, oder Reversiermotor vor. Die Drehbewegung des Rundläufermotors wird über ein Gestänge beziehungsweise ein Hebelgetriebe in die notwendige alternierende beziehungsweise reversierende Bewegung übersetzt. Die Wirkverbindung zwischen dem Wischermotor und dem Wischerarm ist über die Antriebswelle hergestellt. Die Antriebswelle kann unmittelbar eine Motorwelle des Wischermotors sein. Alternativ liegt sie jedoch als Ausgangswelle eines Getriebes, insbesondere des Hebelgetriebes, beziehungsweise des Gestänges vor. Ebenso kann die Antriebswelle unmittelbar mit dem Wischerarm verbunden sein, sodass die Antriebswelle dieselbe Drehachse aufweist wie der Wischerarm.

Eine Weiterbildung der Erfindung sieht vor, dass die erste Absolutdrehzahl kleiner als die zweite Absolutdrehzahl gewählt wird. In dem Zeitraum nach jeder Wendestellung soll also die Geschwindigkeit reduziert werden, mit welcher der Wischerarm beziehungsweise das Wischerblatt über die Scheibe bewegt wird. Entsprechend wird die Absolutdrehzahl der Antriebswelle während des Zeitraums reduziert. Dabei soll die der ersten Absolutdrehzahl entsprechende Absolutdrehzahl der Antriebswelle stets kleiner als die zweite Absolutdrehzahl sein, welche an dem zweiten Zeitpunkt vorliegt.

Eine Weiterbildung der Erfindung sieht vor, dass der Absolutwert der Ableitung der Absolutdrehzahl über der Zeit an dem zweiten Zeitpunkt größer ist als der Absolutwert der Ableitung der Absolutdrehzahl an dem ersten Zeitpunkt. Innerhalb des bestimmten Zeitraums nach jeder Wendestellung soll also nicht nur die Absolutdrehzahl der Antriebswelle an dem ersten Zeitpunkt von derjenigen an dem zweiten Zeitpunkt verschieden sein. Vielmehr soll auch die Zunahme der Absolutdrehzahl pro Zeiteinheit geringer sein als zu dem zweiten Zeitpunkt. Entsprechend soll die Ableitung der Absolutdrehzahl beziehungsweise deren Absolutwert an dem ersten Zeitpunkt kleiner sein als zu dem zweiten Zeitpunkt. Unter dem Absolutwert ist der Betrag der jeweiligen Ableitung zu verstehen.

Die Erfindung sieht vor, dass der Zeitraum an einer der Wendestellungen beginnt und bei einem Zeitpunkt endet, die bei mindestens 20 % der Wendestellungszeitspanne nach der jeweiligen Wendestellung vorliegt, wobei die Wendestellungszeitspanne der zeitlichen Differenz zwischen der ersten und der zweiten Wendestellung entspricht. Die Wendestellungszeitspanne ist also die Differenz zwischen den Zeitpunkten, welche der ersten und der zweiten Wendestellung zugeordnet sind. Die Antriebswelle muss während der Wendestellungszeitspanne um eine bestimmte Wendestellungsdrehwinkeldifferenz gedreht werden, damit der Wischerarm ausgehend von der ersten Wendestellung in die zweite Wendestellung oder umgekehrt verlagert wird. Der bestimmte Zeitraum, innerhalb welcher die Absolutdrehzahl der Antriebswelle entsprechend den vorstehenden Ausführungen variiert werden soll, beginnt an der jeweiligen Wendestellung beziehungsweise an dem dieser zugeordneten Zeitpunkt. Er endet an einem Zeitpunkt, der um einen bestimmten Anteil der Wendestellungszeitspanne nach der Wendestellung liegt. Der Anteil beträgt beispielsweise mindestens 20 % und höchstens 50 %. Alternativ kann der Anteil jedoch auch mindestens 5 %, 10 % oder 15 % und höchstens 20 %, 30 % oder 40 % betragen. Prinzipiell können also der Mindestanteil und der Höchstanteil an der Wendestellungszeitspanne, um welche sich der Zeitraum ausgehend von der jeweiligen Wendestellung erstreckt, beliebig gewählt sein.

Eine Weiterbildung der Erfindung sieht vor, dass der Wischermotor derart betrieben wird, dass eine Maximalabsolutdrehzahl der Antriebswelle außerhalb des bestimmten Zeitraums erreicht wird. Außerhalb des Zeitraums wird also die Absolutdrehzahl des Wischermotors so gewählt, dass zumindest kurzfristig die Maximalabsolutdrehzahl vorliegt. Unter der Maximalabsolutdrehzahl ist dabei der Absolutwert der Drehzahl der Antriebswelle zu verstehen, welcher höchstens zwischen den beiden Wendestellungen vorliegt, also von dem Wischermotor beziehungsweise der Antriebswelle erreicht wird. Das bedeutet insgesamt, dass nach der Wendestellung zunächst bevorzugt die Absolutdrehzahl der Antriebswelle geringer ist als an einem um die entsprechende Zeitspanne vor der Wendestellung liegenden Zeitpunkt, wobei bevorzugt zusätzlich auch der Absolutwert der Ableitung an dem ersten Zeitpunkt kleiner ist als an dem zweiten Zeitpunkt. Nachfolgend soll jedoch die Maximalabsolutdrehzahl erreicht werden. Somit steigt die Absolutdrehzahl der Antriebswelle nach dem Verlassen des bestimmten Zeitraums üblicherweise weiter an.

Eine Weiterbildung der Erfindung sieht vor, dass die Maximalabsolutdrehzahl der Antriebswelle zu einem Maximaigeschwindigkeitszeitpunkt erreicht wird, welcher zwischen 50 % und 80 % der Wendestellungszeitspanne nach einer der Wendestellungen liegt. Der Begriff der Wendestellungszeitspanne wurde bereits vorstehend erläutert. Die höchste von der Antriebswelle erreichte Absolutdrehzahl soll nun außerhalb des bestimmten Zeitraums vorliegen. Besonders bevorzugt ist dies zu einem Zeitpunkt der Fall, welcher um einen bestimmten Anteil der der Wendestellungszeitspanne nach der jeweiligen, unmittelbar zuvor passierten, Wendestellung liegt. Der bestimmte Anteil kann prinzipiell beliebig gewählt sein, beispielsweise zwischen 50 % und 80 %. Dabei sind die dazwischen liegenden Werte eingeschlossen, sodass der Anteil insbesondere 60 % oder 70 % betragen kann.

Eine Weiterbildung der Erfindung sieht vor, dass der zeitliche Verlauf der Absolutdrehzahl der Antriebswelle nach der ersten Wendestellung wenigstens bereichsweise gleich dem Verlauf der Absolutdrehzahl der Antriebswelle nach der zweiten Wendestellung ist. Bei üblicherweise verwendeten Verfahren ist der Verlauf der Drehzahl der Antriebswelle aufgetragen über der Zeit punktsymmetrisch zu der jeweiligen Wendestellung. Insoweit ist der Verlauf der Absolutdrehzahl bei entsprechender Betrachtung achsensymmetrisch zu einer Achse an einem konstanten, der Wendestellung entsprechenden Zeitpunkt. Dies ist für das hier beschriebene Verfahren nicht der Fall. Vielmehr soll der zeitliche Verlauf der Absolutdrehzahl lediglich periodisch sein, sodass die Absolutdrehzahl an einem um eine bestimmte Zeitspanne nach der ersten Wendestellung vorliegenden Zeitpunkt gleich der Absolutdrehzahl an einem um dieselbe Zeitspanne nach der unmittelbar auf die erste Wendestellung folgenden zweiten Wendestellung gelegenen Zeitpunkt ist.

Bevorzugt wird die Absolutdrehzahl derart gewählt, dass ein mit der Scheibe in Berührkontakt stehender Bereich der Wischlippe nicht entgegen der Bewegungsrichtung des Wischerblatts bewegt wird. Das Zurückfedern des Wischerarms bei oder nach Passieren der Wendestellungen kann verstärkt werden, wenn der unmittelbar mit der Scheibe in Berührkontakt stehende Bereich der Wischlippe gleichzeitig auf der Scheibe gleitet und sich dabei entgegen der Bewegungsrichtung des Wischerblatts bewegt. Entsprechend wird auch die Intensität des Geräuschs stärker. Dies kann durch entsprechende Auswahl der Absolutdrehzahl verhindert werden. Die Absolutdrehzahl, insbesondere in dem Drehwinkelbereich nach jeder Wendestellung, ist also auf das Zusammenwirken der Wischlippe mit der Scheibe abgestimmt, insbesondere auf den Anpressdruck, mit welchem der Wischerarm und damit die Wischlippe in Richtung der Scheibe gedrängt ist.

Eine Weiterbildung der Erfindung sieht vor, dass der Zeitraum, die Differenz zwischen der ersten Absolutdrehzahl und der zweiten Absolutdrehzahl, die Maximalabsolutgeschwindigkeit und/oder der Maximalgeschwindigkeitszeitpunkt in Abhängigkeit von der Wendestellungszeitspanne bestimmt werden. Die genannten Größen werden also derart in Abhängigkeit der Wendestellungszeitspanne beziehungsweise der Wischfrequenz gewählt, dass sie für zwei unterschiedliche Werte derselben jeweils verschieden sein können. Sie sind entsprechend als Funktion der Wendestellungszeitspanne angegeben.

Die Erfindung betrifft weiterhin eine Scheibenwischeinrichtung zur Durchführung des vorstehend erläuterten Verfahrens, die zumindest ein an einem Wischerarm vorgesehenes Wischerblatt mit einer mit einer Scheibe des Kraftfahrzeugs in Berührkontakt stehenden flexiblen Wischlippe aufweist und die dazu ausgebildet ist, das Wischerblatt bezüglich der Scheibe mittels einem mit dem Wischerarm über eine Antriebswelle wirkverbundenen Wischermotor alternierend zwischen einer ersten Wendestellung und einer zweiten Wendestellung zu bewegen, wobei innerhalb eines bestimmten Zeitraums nach jeder Wendestellung die Absolutdrehzahl der Antriebswelle an einem um eine bestimmte Zeitspanne nach der jeweiligen Wendestellung liegenden ersten Zeitpunkt entsprechend einer ersten Absolutdrehzahl derart gewählt wird, dass sie von einer zweiten Absolutdrehzahl verschieden ist, die an einem um die bestimmte Zeitspanne vor der jeweiligen Wendestellung liegenden zweiten Zeitpunkt vorliegt. Das Verfahren kann gemäß den vorstehenden Ausführungen weitergebildet sein. Mit einer derartigen Scheibenwischeinrichtung wird das bereits erläuterte Zurückfedern nach dem Richtungswechsel des Wischerarms in oder nach den Wendestellungen und damit das dabei entstehende Geräusch in seiner Intensität verringert. Dabei ist vorgesehen, dass der Zeitraum an einer der Wendestellungen beginnt und bei einem Zeitpunkt endet, der bei mindestens 20% der Wendestellungszeitspanne nach der jeweiligen Wendestellung vorliegt, wobei die Wendestellungszeitspanne der zeitlichen Differenz zwischen der ersten und der zweiten Wendestellung entspricht.

Eine Weiterbildung der Erfindung sieht vor, dass die Wischlippe einen flexiblen Steg aufweist, über welchen sie mit dem Wischerblatt verbunden ist. Der flexible Steg stellt die flexible Verbindung der Wischlippe mit dem Wischerblatt her. Es muss also nicht die gesamte Wischlippe flexibel ausgebildet sein, vielmehr reicht die flexible Ausbildung des Stegs bereits aus. Der flexible Steg ist notwendig, damit die Wischlippe stets entgegen der Bewegungsrichtung des Wischerarms beziehungsweise des Wischerblatts ausgelenkt werden kann, sodass die Reinigungswirkung der Scheibenwischeinrichtung verbessert wird. Das Auslenken in die der Bewegungsrichtung abgewandte Richtung ermöglicht jedoch auch insbesondere das Zurückfedern nach dem Durchlaufen der Wendestellungen, Dieses kann jedoch gemäß den vorstehenden Ausführungen durch entsprechende Wahl beziehungsweise entsprechendes Einstellen der Absolutdrehzahl der Antriebswelle innerhalb des bestimmten Zeitraums zumindest vermindert werden.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine schematische Darstellung eines Wischerblatts mit einer Wischlippe einer Scheibenwischeinrichtung in verschiedenen Betriebszuständen der Scheibenwischeinrichtung, und
- Figur 2: ein Diagramm, in welchem eine Drehzahl einer Antriebswelle der Scheibenwischeinrichtung über einer Drehwinkelposition aufgetragen ist.

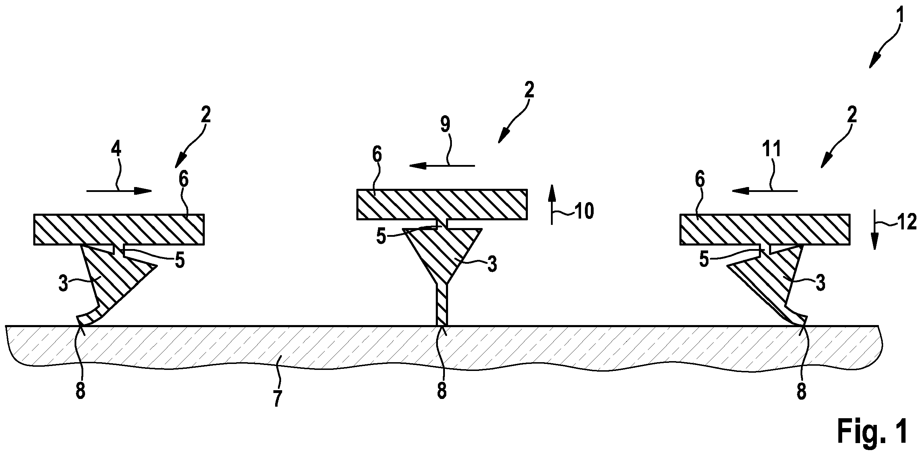

Die Figur 1 zeigt einen Bereich einer Scheibenwischeinrichtung 1 in drei verschiedenen Betriebszuständen. Dabei ist ein Wischerblatt 2 mit einer Wischlippe 3 dreifach dargestellt. Links ist das Wischerblatt 2 gezeigt, während es sich in die durch den Pfeil 4 angedeutete Richtung bewegt. Es wird deutlich, dass die Wischlippe 3, welche über einen flexiblen Steg 5 mit einer Schulter 6 des Wischerblatts 2 verbunden ist, entgegen der durch den Pfeil 4 angedeuteten Bewegungsrichtung ausgelenkt ist. Dabei tritt die Wischlippe 3 abseits des Stegs 5 in Berührkontakt mit der Schulter 6. Auf der der Schulter 6 abgewandten Seite der Wischlippe 3 steht letztere in Berührkontakt mit einer Scheibe 7 eines Kraftfahrzeugs, welche hier lediglich schematisch dargestellt ist. Die Scheibe 7 kann beispielsweise eine Frontscheibe oder eine Heckscheibe des Kraftfahrzeugs sein. Die Wischlippe 3 weist einen Bereich 8 auf, welcher vorzugsweise permanent mit der Scheibe 7 in Berührkontakt steht. Entsprechend liegt auch eine Reibwirkung beziehungsweise Haftwirkung zwischen der Wischlippe 3 und der Scheibe 7, insbesondere in dem Bereich 8, vor. Diese Reib- beziehungsweise Haftwirkung bewirkt das Auslenken der Wischlippe 3 entgegen der Bewegungsrichtung des Wischerblatts 2.

In der Mitte der Figur 1 ist das Wischerblatt 2 bei Durchlaufen einer Wendestellung gezeigt. In dieser Wendestellung ändert sich die Bewegungsrichtung des Wischerblatts 2, welche hier durch den Pfeil 9 angedeutet ist. Bedingt durch die Reib- beziehungsweise Haftwirkung zwischen der Wischlippe 3 und der Scheibe 7 bleibt der Bereich 8 zunächst stationär bezüglich der Scheibe 7. Dadurch kommt es zu einem Aufrichten der Wischlippe 3 und damit zu einer von der Scheibe 7 weggerichteten Bewegung des Wischerblatts 2, welche durch den Pfeil 10 angedeutet ist.

Nach dem Durchlaufen der Wendestellung kommt es, wie rechts in der Figur 1 gezeigt, bei einer weiteren Bewegung des Wischerblatts 2 in Richtung des Pfeils 11, zu einem erneuten Abkippen der Wischlippe 3 entgegen der Bewegungsrichtung des Wischerblatts 2. Entsprechend bewegt sich das Wischerblatt 2 wieder auf die Scheibe 7 zu. Dies ist durch den Pfeil 12 angedeutet. Durch das Abknicken der Wischlippe 3 tritt diese wiederum abseits des Stegs 5 in Berührkontakt mit der Schulter 6. Durch die Bewegung des Wischerblatts 2 auf die Scheibe zu und das Auftreten des Berührkontakts wird ein Schlag in Richtung des Pfeils 12 auf die Scheibe 7 übertragen. Dies bewirkt die Entstehung eines Geräuschs, welches häufig als störend empfunden wird.

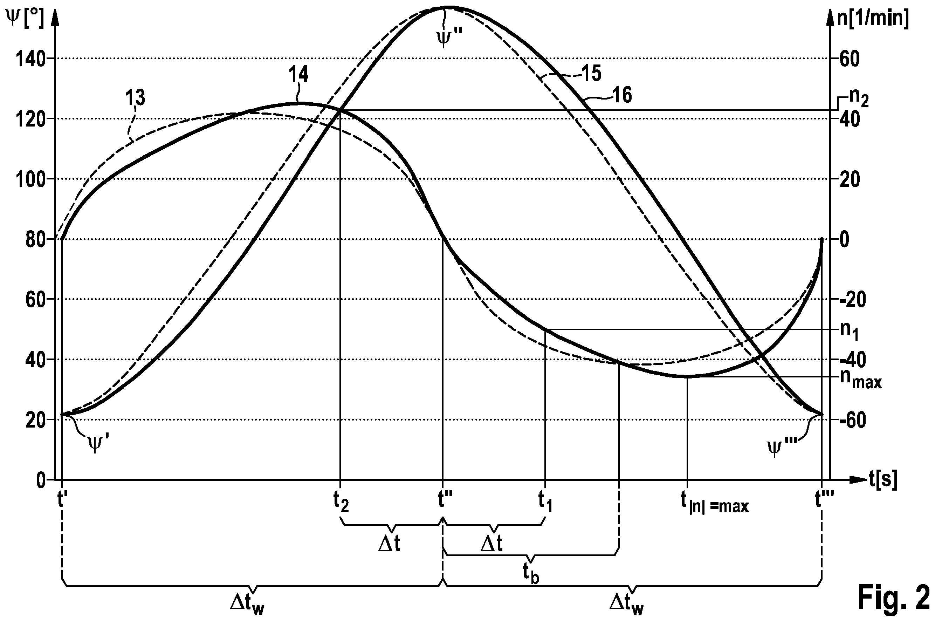

Die Bewegung des Wischerblatts 2 beziehungsweise eines das Wischerblatt 2 tragenden Wischerarms (nicht dargestellt) soll daher derart gewählt werden, dass das Zurückfedern des Wischerblatts 2 in Richtung der Scheibe 7 langsamer erfolgt und entsprechend das Geräusch in seiner Intensität gedämpft wird. Zu diesem Zweck wird eine Absolutdrehzahl einer hier nicht dargestellten Antriebswelle, über welche der Wischerarm mittels eines Wischermotors antreibbar ist, entsprechend gewählt. Dies wird nachfolgend anhand der Figur 2 beschrieben.

Die Figur 2 zeigt ein Diagramm, in welchem eine Drehzahl n der Antriebswelle der Scheibenwischeinrichtung 1 und eine Drehwinkelposition Ψ der Antriebswelle über der Zeit t aufgetragen ist. Die Drehzahl n wird dabei in der Einheit 1/min, die Drehwinkelposition Ψ in der Einheit ° (Grad) und die Zeit in Sekunden angegeben. Ein Verlauf 13 gibt dabei die Drehzahl der Antriebswelle einer üblichen Scheibenwischeinrichtung 1 an, während ein Verlauf 14 die Drehzahl angibt, mit welcher das vorstehend beschriebene Zurückfedern des Wischerblatts 2 in Richtung der Scheibe 7 in seiner Intensität verringert werden kann. Entsprechend gibt ein Verlauf 15 die Drehwinkelposition ψ der Antriebswelle über der Zeit für eine übliche Scheibenwischeinrichtung und ein Verlauf 16 die Drehwinkelposition ψ für das erfindungsgemäße Verfahren an. Die Verläufe 13 und 14 sowie die Verläufe 15 und 16 durchlaufen drei Wendepunkte, nämlich zu den Zeitpunkten t', t" und t''', welchen drei Drehwinkelpositionen ψ'. ψ" und ψ''' zugeordnet werden können. Entsprechend ist die Drehzahl n zu diesen Zeitpunkten gleich Null. Die beabsichtigte Vorgehensweise wird im Folgenden anhand der Wendestellung beschrieben, welche zum Zeitpunkt t" vorliegt. Die den Zeitpunkten zugehörigen Drehwinkelpositionen können anhand des jeweiligen Verlaufs 15 oder 16 bestimmt werden.

Innerhalb eines bestimmten Zeitraums t_{b}, welcher nach jeder Wendestellung vorliegt, soll die Drehzahl n der Antriebswelle an einem um eine bestimmte Zeitspanne Δt nach der jeweiligen Wendestellung ψ', ψ" oder ψ"' beziehungsweise dem jeweiligen Zeitpunkt t', t" oder t"' liegenden ersten Zeitpunkt t₁ einer ersten Absolutdrehzahl n₁ entsprechen. Diese erste Absolutdrehzahl n₁ ist von einer zweiten Absolutdrehzahl n₂ verschieden, welche an einem um die bestimmte Zeitspanne Δt vor der jeweiligen Wendestellung ψ" beziehungsweise t" liegenden zweiten Zeitpunkt t₂ vorliegt. Der Zeitraum t_{b} kann prinzipiell beliebig groß sein. Üblicherweise wird er als Anteil einer Wendesteilungszeitspanne Δt_{w} angegeben, welche die zeitliche Differenz zwischen den Drehwinkelpositionen ψ', ψ" und ψ"' beziehungsweise den entsprechenden Zeitpunkten t', t" und t"' angibt, welche der ersten und der zweiten Wendestellung entsprechen. In dem hier dargestellten Ausführungsbeispiel soll der Zeitraum t_{b} etwas weniger als 50 % der Wendestellungszeitspanne Δt_{w} betragen.

Insbesondere innerhalb dieses Zeitraums t_{b} wird nun die Drehzahl n der Antriebswelle entsprechend dem Verlauf 14 derart eingestellt, dass der Verlauf 14 bezüglich der jeweiligen Wendestellung (hier: ψ" beziehungsweise t") nicht mehr symmetrisch ist. Bei der hier dargestellten vorzeichenbehafteten Drehzahl n bedeutet dies, dass keine Punktsymmetrie vorliegt. Wird dagegen eine Darstellung gewählt, in welcher die Absolutdrehzahlen |n| über der Zeit aufgetragen wird, so liegt keine Achsensymmetrie bezüglich t = konst. vor. Ausgehend von dem Zeitpunkt t" der Wendestellung werden nun der erste Zeitpunkt t₁ und der zweite Zeitpunkt t₂ definiert. Diese liegen ausgehend von t" jeweils um Δt in Richtung späterer beziehungsweise früherer Zeitpunkte. Es gilt demnach t₁ = t" - Δt und t₂ = t" - Δt. Für die Absolutdrehzahl |n₂| zu dem zweiten Zeitpunkt t₂ ergibt sich nun aus dem Diagramm der Figur 2 ein größerer Wert als für die Absolutdrehzahl |n₁| zu dem Zeitpunkt t₁. Die Absolutdrehzahlen |n₁| und |n₂| sind demnach unterschiedlich. In einer alternativen Ausführungsform könnte es jedoch auch vorgesehen sein, dass zum Dämpfen des Zurückfederns des Wischerblatts 2 die erste Absolutdrehzahl |n₁| größer als die zweite Absolutdrehzahl |n₂| ist.

Zusätzlich ist ausweislich des Verlaufs 14 vorgesehen, dass der Absolutwert der Ableitung der Absolutdrehzahl |n| über der Zeit t zu dem zweiten Zeitpunkt t₂ größer ist als der Absolutwert der Ableitung der Absolutdrehzahl |n| zu dem ersten Zeitpunkt t₁. Die Figur 2 macht auch deutlich, dass eine Maximalabsolutdrehzahl |nₘₐₓ| bei einem Maximalgeschwindigkeitszeitpunkt t_{|n|=max} erreicht wird, welcher außerhalb des bestimmten Zeitraums t_{b} liegt. Insbesondere liegt der Maximalgeschwindigkeitszeitpunkt t_{|n|=max}, an welchem die Maximalabsolutdrehzahl |nₘₐₓ| erreicht wird, zwischen 50 % und 80 % der Wendestellungszeitspanne Δt_{w} nach der Wendestellung ψ" beziehungsweise t". Durch eine Wahl der Drehzahl n der Antriebswelle der Scheibenwischeinrichtung 1 entsprechend dem Verlauf 14 werden die erfindungsgemäßen Vorteile erreicht, nämlich dass die Geschwindigkeit, mit welcher der Wischerarm beziehungsweise das Wischerblatt 2 in oder nach der Wendestellung in Richtung der Scheibe 7 bewegt wird, kleiner ist als bei aus dem Stand der Technik bekannten Scheibenwischeinrichtungen. Entsprechend wird auch die Intensität des dabei erzeugten Geräuschs verringert.

## Patentansprüche

1. Verfahren zum Betreiben einer Scheibenwischeinrichtung (1), insbesondere eines Kraftfahrzeugs, wobei die Scheibenwischeinrichtung (1) zumindest ein an einem Wischerarm vorgesehenes Wischerblatt (2) mit einer mit einer Scheibe (7) des Kraftfahrzeugs in Berührkontakt stehenden flexiblen Wischlippe (3) aufweist und das Wischerblatt (2) bezüglich der Scheibe (7) von einem mit dem Wischerarm über eine Antriebswelle wirkverbundenen Wischermotor alternierend zwischen einer ersten Wendestellung (ψ',ψ"';t',t"') und einer zweiten Wendestellung (ψ";t") bewegt wird, wobei innerhalb eines bestimmten Zeitraums (t_{b}) nach jeder Wendestellung (ψ',ψ".ψ"';t',t",t"') die Absolutdrehzahl (|n|) der Antriebswelle an einem um eine bestimmte Zeitspanne (Δt) nach der jeweiligen Wendestellung (ψ',ψ",ψ'";t',t".t'") liegenden ersten Zeitpunkt (t₁) entsprechend einer ersten Absolutdrehzahl (|n₁|) derart gewählt wird, dass sie von einer zweiten Absolutdrehzahl (|n₂|) verschieden ist, die an einem um die bestimmte Zeitspanne (Δt) vor der jeweiligen Wendestellung (ψ',ψ",ψ'";t',t",t'") liegenden zweiten Zeitpunkt (t₂) vorliegt, **dadurch gekennzeichnet, dass** der Zeitraum (t_{b}) an einer der Wendestellungen (ψ',ψ",ψ"';t',t",t'") beginnt und bei einem Zeitpunkt endet, der bei mindestens 20 % der Wendestellungszeitspanne (_{Δ}t_{w}) nach der jeweiligen Wendestellung (ψ',ψ",ψ'";t',t",t'") vorliegt, wobei die Wendestellungszeitspanne (_{Δ}t_{w}) der zeitlichen Differenz zwischen der ersten und der zweiten Wendestellung (ψ',ψ",ψ'";t',t",t'") entspricht.

2. Verfahren nach Anspruch 1, **dadurch gekennzeichnet, dass** die erste Absolutdrehzahl (|n₁|) kleiner als die zweite Absolutdrehzahl (|n₂|) gewählt wird.

3. Verfahren nach einem der vorhergehenden Ansprüche, **dadurch gekennzeichnet, dass** der Absolutwert der Ableitung der Absolutdrehzahl (|n₂|) über der Zeit (t) an dem zweiten Zeitpunkt (t₂) größer ist als der Absolutwert der Ableitung der Absolutdrehzahl (|n₁|) an dem ersten Zeitpunkt (t₁).

4. Verfahren nach einem der vorhergehenden Ansprüche, **dadurch gekennzeichnet, dass** der Wischermotor derart betrieben wird, dass eine Maximalabsolutdrehzahl (|nₘₐₓ|) der Antriebswelle außerhalb des bestimmten Zeitraums (t_{b}) erreicht wird.

5. Verfahren nach einem der vorhergehenden Ansprüche, **dadurch gekennzeichnet, dass** die Maximalabsolutdrehzahl (|nₘₐₓ|) der Antriebswelle zu einem Maximalgeschwindigkeitszeitpunkt (t_{|n|=max}) erreicht wird, welcher zwischen 50 % und 80 % der Wendestellungszeitspanne (Δt_{w}) nach einer der Wendestellungen (ψ',ψ",ψ'";t',t",t'") liegt.

6. Verfahren nach einem der vorhergehenden Ansprüche, **dadurch gekennzeichnet, dass** der zeitliche Verlauf (14) der Absolutdrehzahl (|n|) der Antriebswelle nach der ersten Wendestellung (ψ',ψ'";t',t'") wenigstens bereichsweise gleich dem Verlauf (14) der Absolutdrehzahl (|n|) der Antriebswelle nach der zweiten Wendestellung (ψ";t") ist.

7. Verfahren nach einem der vorhergehenden Ansprüche, **dadurch gekennzeichnet, dass** der Zeitraum (t_{b}), die Differenz zwischen der ersten Absolutdrehzahl (|n₁|) und der zweiten Absolutdrehzahl (|n₂|), die Maximalabsolutdrehzahl (|nₘₐₓ|) und/oder der Maximalgeschwindigkeitszeitpunkt (t_{|n|=max}) in Abhängigkeit von der Wendestellungszeitspanne (_{Δ}t_{w}) bestimmt werden.

8. Scheibenwischeinrichtung (1) zur Durchführung des Verfahrens nach einem oder mehreren der vorhergehenden Ansprüche, die zumindest ein an einem Wischerarm vorgesehenes Wischerblatt (2) mit einer mit einer Scheibe (7) des Kraftfahrzeugs in Berührkontakt stehenden flexiblen Wischlippe (3) aufweist und die dazu ausgebildet ist, das Wischerblatt (2) bezüglich der Scheibe (7) mittels einem mit dem Wischerarm über eine Antriebswelle wirkverbundenen Wischermotor alternierend zwischen einer ersten Wendestellung (ψ',ψ"';t',t"') und einer zweiten Wendestellung (ψ";t") zu bewegen, wobei innerhalb eines bestimmten Zeitraums (t_{b}) nach jeder Wendestellung (ψ',ψ",ψ'";t',t",t'") die Absolutdrehzahl (|n|) der Antriebswelle an einem um eine bestimmte Zeitspanne (Δt) nach der jeweiligen Wendestellung (ψ',ψ",ψ'";t',t",t'") liegenden ersten Zeitpunkt (t₁) entsprechend einer ersten Absolutdrehzahl (|n₁|) derart gewählt wird, dass sie von einer zweiten Absolutdrehzahl (|n₂|) verschieden ist, die an einem um die bestimmte Zeitspanne (Δt) vor der jeweiligen Wendestellung (ψ',ψ",ψ"';t',t",t"') liegenden zweiten Zeitpunkt (t₂) vorliegt, **dadurch gekennzeichnet, dass** der Zeitraum (t_{b}) an einer der Wendestellungen (ψ',ψ",ψ"';t',t"',t"') beginnt und bei einem Zeitpunkt endet, der bei mindestens 20 % der Wendestellungszeitspanne (_{Δ}t_{w}) nach der jeweiligen Wendestellung (ψ',ψ",ψ"';t',t",t'") vorliegt, wobei die Wendestellungszeitspanne (_{Δ}t_{w}) der zeitlichen Differenz zwischen der ersten und der zweiten Wendestellung (ψ',ψ",ψ'";t',t",t'") entspricht.

9. Scheibenwischeinrichtung nach Anspruch 8, **dadurch gekennzeichnet, dass** die Wischlippe (3) einen flexiblen Steg (5) aufweist, über welchen sie mit dem Wischerblatt (2) verbunden ist.

## Claims

1. Method for operating a window wiper device (1), in particular of a motor vehicle, wherein the window wiper device (1) has at least one wiper blade (2) which is provided on a wiper arm and has a flexible wiping lip (3) which is in contact with a window (7) of the motor vehicle, and the wiper blade (2) is moved, with respect to the window (7), alternately between a first turning position (ψ',ψ"';t',t"') and a second turning position (ψ";t") via a wiper motor which is operatively connected to the wiper arm via a driveshaft, wherein within a specific time period (t_{b}) after each turning point (ψ',ψ",ψ"';t',t",t'"), the absolute rotational speed (|n|) of the driveshaft is selected, at a first point in time (t₁) which is a specific time period (Δt) after the respective turning point (ψ',ψ",ψ"';t',t",t"'), in accordance with a first absolute rotational speed (|n₁|) , in such a way that it is different from a second absolute rotational speed (|n₂|) which occurs at a second point in time (t₂) which is before the respective turning point (ψ',ψ",ψ'";t',t",t"') by the specific time period (Δt), **characterized in that** the time period (t_{b}) starts at one of the turning points (ψ',ψ",ψ"';t',t",t"') and ends at a point in time which occurs at at least 20% of the turning point time period (_{Δ}t_{w}) after the respective turning point (ψ',ψ",ψ'";t',t",t"'), wherein the turning point time period (_{Δ}t_{w}) corresponds to the difference in time between the first and second turning points (ψ',ψ",ψ"';t',t",t"').

2. Method according to Claim 1, **characterized in that** the first absolute rotational speed (|n₁|) is selected to be lower than the second absolute rotational speed (|n₂|).

3. Method according to one of the preceding claims, **characterized in that** the absolute value of the derivation of the absolute rotational speed (|n₂|) over the time (t) is higher at the second point in time (t₂) than the absolute value of the derivative of the absolute rotational speed (|n₁|) at the first point in time (t₁).

4. Method according to one of the preceding claims, **characterized in that** the wiper motor is operated in such a way that a maximum absolute rotational speed (|nₘₐₓ|) of the driveshaft is reached outside the specific time period (t_{b}).

5. Method according to one of the preceding claims, **characterized in that** the maximum absolute rotational speed (|nₘₐₓ|) of the driveshaft is reached at a maximum speed point in time (t_{|n|=max}) which is between 50% and 80% of the turning point time period (Δt_{w}) after one of the turning points (ψ',ψ",ψ"';t',t",t"').

6. Method according to one of the preceding claims, **characterized in that** the time profile (14) of the absolute rotational speed (|n|) of the driveshaft after the first turning point (ψ',ψ"';t',t'") is the same, at least in certain areas, as the profile (14) of the absolute rotational speed (|n|) of the driveshaft after the second turning point (ψ";t").

7. Method according to one of the preceding claims, **characterized in that** the time period (t_{b}), the difference between the first absolute rotational speed (|n₁|) and the second absolute rotational speed (|n₂|), the maximum absolute rotational speed (|nₘₐₓ|) and/or the maximum speed point in time (t_{|n|=max}) are determined in accordance with the turning point time period (_{Δ}t_{w}).

8. Window wiper device (1) for carrying out the method according to one or more of the preceding claims, which has at least one wiper blade (2) which is provided on a wiper arm and has a flexible wiping lip (3) which is in contact with a window (7) of the motor vehicle, and which is designed to move the wiper blade (2), with respect to the window (7), alternately between a first turning point (ψ',ψ"';t',t"') and a second turning point (ψ";t") by means of a wiper motor which is operatively connected to the wiper arm via a driveshaft, wherein within a specific time period (t_{b}) after each turning point (ψ',ψ",ψ"';t',t",t"'), the absolute rotational speed (|n|) of the driveshaft is selected, at a first point in time (t₁) which is a specific time period (Δt) after the respective turning point (ψ',ψ",ψ"';t',t",t'"), in accordance with a first absolute rotational speed (|n₁|), in such a way that it is different from a second absolute rotational speed (|n₂|) which occurs at a second point in time (t₂) which is before the respective turning point (ψ',ψ",ψ"';t',t",t'") by the specific time period (Δt), **characterized in that** the time period (t_{b}) starts at one of the turning points (ψ',ψ",ψ"';t',t",t'") and ends at a point in time which occurs at at least 20% of the turning point time period (Δt_{w}) after the respective turning point (ψ',ψ",ψ'";t',t",t"'), wherein the turning point time period (_{Δ}t_{w}) corresponds to the difference in time between the first and second turning points ψ',ψ"ψ"';t',t",t"').

9. Window wiper device according to Claim 8, **characterized in that** the wiping lip (3) has a flexible web (5) via which it is connected to the wiper blade (2).

## Revendications

1. Procédé de fonctionnement d'un dispositif d'essuie-glace (1), en particulier d'un véhicule, dans lequel le dispositif d'essuie-glace (1) comporte au moins une lame de balayage (2) prévue sur un bras d'essuie-glace et dotée d'une lèvre d'essuyage (3) flexible se trouvant en contact avec une vitre (7) du véhicule et la lame de balayage (2) est mue par rapport à la vitre (7) par un moteur d'essuie-glace relié de manière opérante au bras d'essuie-glace par le biais d'un arbre d'entraînement et alternant entre une première position de retournement (ψ',ψ'";t',t"') et une deuxième position de retournement (ψ";t"), dans lequel, à l'intérieur d'une période de temps déterminée (t_{b}) après chaque position de retournement (ψ',ψ",ψ"';t',t",t"'), le nombre de tours absolu **(|*n*|)** de l'arbre d'entraînement à un premier moment (t₁) situé à un intervalle de temps défini (Δt) après la position de retournement respective (ψ',ψ",ψ'";t',t",t"') et correspondant à un premier nombre de tours absolu **(|*n*₁|)** est choisi de telle sorte qu'il est différent d'un deuxième nombre de tours absolu **(|*n*₂|)** existant à un deuxième instant (t₂) se situant à un intervalle de temps défini (Δt) avant la position de retournement respective (ψ',ψ",ψ"';t', t",t"'), **caractérisé en ce que** la période de temps (t_{b}) commence à une des positions de retournement (ψ', ψ",ψ"';t',t",t"') et se termine à un instant lors duquel au moins 20 % de l'intervalle de position de retournement (Δt_{w}) est situé après la position de retournement respective (ψ',ψ",ψ"';t',t",t"'), dans lequel l'intervalle de position de retournement (Δt_{w}) correspond à la différence temporelle entre la première et la deuxième position de retournement (ψ', ψ",ψ"';t',t",t"').

2. Procédé d'après la revendication 1, **caractérisé en ce que** le premier nombre de tours absolu **(|*n*₁|)** est choisi comme inférieur au deuxième nombre de tours absolu **(l*n*₂|)**.

3. Procédé d'après l'une des revendications précédentes, **caractérisé en ce que** la valeur absolue de la dérivée du nombre de tours absolu **(|*n*₂|)** sur le temps (t) au deuxième instant (t₂) est supérieure à la valeur absolue de la dérivée du nombre de tours absolu (|*n*₁|) au premier instant (t₁).

4. Procédé d'après l'une des revendications précédentes, **caractérisé en ce que** le moteur d'essuie-glace fonctionne de telle sorte qu'il atteint un nombre de tours absolu maximal **(|*nₘₐₓ*|)** de l'arbre d'entraînement hors de la période de temps définie (t_{b}).

5. Procédé d'après l'une des revendications précédentes, **caractérisé en ce que** le nombre de tours absolu maximal ***(*|*nₘₐₓ*|*)*** de l'arbre d'entraînement est atteint à un instant de vitesse maximale (*t*_{|*n*|=*max*}), lequel est situé entre 50 % et 80 % de l'intervalle de position de retournement (Δt_{w}) après une des positions de retournement (ψ',ψ",ψ'";t',t",t"').

6. Procédé d'après l'une des revendications précédentes, **caractérisé en ce que** la courbe temporelle (14) du nombre de tours absolu (|*n*|) de l'arbre d'entraînement après la première position de retournement (ψ',ψ"';t',t"') est au moins en partie identique à la courbe (14) du nombre de tours absolu (|*n*|) de l'arbre d'entraînement après la deuxième position de retournement (ψ";t").

7. Procédé d'après l'une des revendications précédentes, **caractérisé en ce que** la période de temps (t_{b}), la différence entre le premier nombre de tours absolu **(|*n*₁|)** et le deuxième nombre de tours absolu **(|*n*₂|),** le nombre de tours absolu maximal **(|*nₘₐₓ*|*)*** et/ou l'instant de vitesse maximale **(*t*_{|*n*|=*max*})** sont définis en fonction de l'intervalle de position de retournement (Δt_{w}).

8. Dispositif d'essuie-glace (1) pour la mise en œuvre du procédé d'après l'une ou plusieurs des revendications précédentes, comportant au moins une lame de balayage (2) prévue sur un bras d'essuie-glace et dotée d'une lèvre d'essuyage (3) flexible se trouvant en contact avec une vitre (7) du véhicule et étant réalisé de façon à mouvoir la lame de balayage (2) par rapport à la vitre (7) au moyen d'un moteur d'essuie-glace relié de manière opérante au bras d'essuie-glace par le biais d'un arbre d'entraînement et alternant entre une première position de retournement (ψ',ψ'";t',t"') et une deuxième position de retournement (ψ";t"), dans lequel, à l'intérieur d'une période de temps déterminée (t_{b}) après chaque position de retournement (ψ',ψ",ψ"';t',t", t"'), le nombre de tours absolu (|*n*|) de l'arbre d'entraînement à un premier moment (t₁) situé à un intervalle de temps défini (Δt) après la position de retournement respective (ψ',ψ",ψ"';t',t",t"') et correspondant à un premier nombre de tours absolu (|*n*₁|) est choisi de telle sorte qu'il est différent d'un deuxième nombre de tours absolu **(|*n*₂|)** existant à un deuxième instant (t₂) se situant à un intervalle de temps défini (Δt) avant la position de retournement respective (ψ',ψ",ψ"';t',t",t"'), **caractérisé en ce que** la période de temps (t_{b}) commence à une des positions de retournement (ψ',ψ",ψ"';t',t",t"') et se termine à un instant lors duquel au moins 20 % de l'intervalle de position de retournement (Δt_{w}) est situé après la position de retournement respective (ψ',ψ", ψ"';t',t",t"'), dans lequel l'intervalle de position de retournement (Δt_{w}) correspond à la différence temporelle entre la première et la deuxième position de retournement (ψ',ψ",ψ'";t',t",t"').

9. Dispositif d'essuie-glace d'après la revendication 8, **caractérisé en ce que** la lèvre d'essuyage (3) comporte une traverse flexible (5), par le biais de laquelle elle est reliée à la lame de balayage (2).
